(19) Europäisches Patentamt / European Patent Office / Office européen des brevets

(11) **EP 2 407 970 A1**

(12) **EUROPEAN PATENT APPLICATION**

(43) Date of publication:
**18.01.2012 Bulletin 2012/03**

(51) Int Cl.:
**G11B 7/24** *(2006.01)*

(21) Application number: **10305782.4**

(22) Date of filing: **15.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Thomson Licensing
92130 Issy-les-Moulineaux (FR)**

(72) Inventors:
• **Knappmann, Stephan
  78658 Zimmern ob Rottweil (DE)**
• **Knittel, Joachim
  78532 Tuttlingen (DE)**

(74) Representative: **Schmidt-Uhlig, Thomas
Deutsche Thomson OHG
European Patent Operations
Karl-Wiechert-Allee 74
30625 Hannover (DE)**

(54) **Super-RENS optical recording medium**

(57) A super-RENS optical recording medium (1) with a mask layer (17) with reduced susceptibility to degradation is proposed. The super-RENS optical recording medium (1) has a first magneto-optical layer (17) as a mask layer (12). The super-RENS optical recording medium (1) further has a second magneto-optical layer (16) located below the first magneto-optical layer (17) in a reading direction. A method and an apparatus for reading from such a super-RENS optical recording medium (1) are also described.

**Fig. 2**

**Description**

The present invention relates to an optical recording medium, and more specifically to a super-RENS optical recording medium with a mask layer with reduced susceptibility to degradation. The invention further relates to a method and an apparatus for reading from such a super-RENS optical recording medium.

Optical data storage is generally limited by the optical resolution of the read/write-system. Straightforward methods of increasing the optical resolution include using a shorter wavelength and a larger numerical aperture NA, at the costs of lens complexity. As an alternative a so-called super-resolution near field structure (Super-RENS) can be placed directly above a data layer of the optical recording medium, which significantly reduces the effective size of a light spot used for reading from and/or writing to the optical recording medium. Optical recording media with such a Super-RENS structure offer the possibility to increase the data density by a factor of 3 to 4 in one dimension compared to a regular optical recording medium. Super-RENS structures formed of a metal oxide or a polymer compound for recording of data and a phase change layer formed of a GeSbTe or an AgInSbTe (AIST, a compound of silver, indium, antimony, and tellurium) based structure for reproducing of data are known from WO 2005/081242 and US 2004/0257968, respectively. A further example of a super-RENS structure is described in WO 2004/032123. In case a semiconductor such as InSb (indium antimonide) or ZnO (zinc oxide) is used for the Super-RENS structure, free charge carriers are generated in the semiconductor layer upon illumination with a reading or recording light beam. The resulting changes of the optical properties of the semiconductor are used for achieving the Super-RENS effect.

The super-resolution effect of the above mentioned materials is related to the increased laser power or temperature during read-out. For phase-change materials it is assumed that a thermal process is the cause of the super-RENS effect. At higher laser power the phase-change material is melted and, as a consequence, the reflectivity is reversibly reduced while the transmission is reversibly increased.

For InSb one possible cause of the super-RENS effect is the reversible semiconductor to metal transition at higher laser power, which is connected with an increase of the reflectivity. However, also for this material thermal melting is discussed as a further possible reason for the nonlinear change at higher read power.

A main disadvantage of materials that make use of a thermal melting process is the higher probability of degradation by diffusion due to the local atomic movement during melting and re-crystallization. Therefore, a super-RENS process that is not connected to a structural phase change would be preferable.

It is an object of the invention to propose a super-RENS optical recording medium, which has a mask layer with reduced susceptibility to degradation.

According to the invention, this object is achieved by a super-RENS optical recording medium with a first magneto-optical layer as a mask layer, which further has a second magneto-optical layer located below the first magneto-optical layer in a reading direction.

An idea of the invention is to use magneto-optical materials and a magnetic phase transition to achieve a super-RENS effect. At a certain temperature, the so-called Curie temperature $T_c$, the magnetization M of any magnetic material decreases to 0. Although this is a thermal process, no rearrangement of atoms is needed. Therefore, the probability of material degradation is greatly reduced. Furthermore, the Kerr-rotation $\theta_k$ of magneto-optical materials like TbFeCo also collapses at $T_c$. This allows to make use of the magneto-optical Kerr-effect (MOKE) for a super-RENS mechanism. The super-RENS optical recording medium is read out by a magneto-optical pickup using an enhanced laser power. The power is adjusted such that in a small area of the focused beam the temperature in the layer stack is between the two Curie temperatures. In this case the magnetization and the MOKE-signal of the first magneto-optical layer is zero in a certain area. The proposed structure allows to achieve a strong super-RENS effect, i.e. a high super-RENS contrast, by suppressing the signal from the low temperature part of the reading laser spot. In addition, as no melting of the active layer is needed to reach the super-resolution regime, the proposed super-RENS optical recording medium shows an improved stability. Apart from the before advantages, a lower cross-talk between neighboring tracks from conventional diffraction is achieved.

Advantageously, the first magneto-optical layer is part of a magneto-optical quadrilayer including a reflective layer, a second dielectric layer, the first magneto-optical layer, and a first dielectric layer.

In this case the proposed structure of the super-RENS optical recording medium is as follows:

| 1 | Substrate with pits |
|---|---|
| 2 | Magneto-optical layer |
| 3 | Reflective layer |
| 4 | Dielectric layer |
| 5 | Magneto-optical layer |

(continued)

| 6 | Dielectric layer |
|---|---|

The layers 3 to 6 form a conventional magneto-optical-quadrilayer, which allows for a good magneto-optical contrast.

Favorably, a Curie temperature $T_c1$ of the first magneto-optical layer is lower than a Curie temperature $T_c2$ of the second magneto-optical layer. At the same time the compensation temperature $T_{comp}2$ of the second magneto-optical layer is preferably lower than the Curie temperature $T_c1$ of the first magneto-optical layer. This is the case if the second magneto-optical layer has a high coercive field $H_c2$ and a high Curie temperature $T_c2$, while the first magneto-optical layer has a moderate coercive field $H_c1$ and a low Curie temperature $T_c1$.

If the compensation temperature of the second magneto-optical layer is lower than $T_c1$, the second magneto-optical layer has a high magnetization around $T_c1$. This means that it creates a magnetic stray field, which keeps the magnetization of the first magneto-optical layer in the heated area in the preferred direction after the read-out process, i.e. during cooling down. This further guarantees that the magnetization of the second magneto-optical layer cannot be changed by moderate external magnetic fields because of the high coercive field around the compensation temperature.

Preferably, the compensation temperature $T_{comp}2$ of the second magneto-optical layer and/or the compensation temperature $T_{comp}1$ of the first magneto-optical layer (is/are close to room temperature. This helps to avoid demagnetization or inversion of the magnetization.

Possible materials that allow to fulfill the above requirements are TbFe or TbFeCo for the first magneto-optical layer and TbFeCo or GdFeCo for the second magneto-optical layer.

Advantageously, a method for reading from a super-RENS optical recording medium according to the invention has the step of adjusting an optical component such that a higher signal is detected for zero magnetization and a lower signal is detected for maximum magnetization.

Accordingly, an apparatus for reading from a Super-RENS optical recording medium according to the invention has an optical component that is adjustable such that a higher signal is detected for zero magnetization and a lower signal is detected for maximum magnetization.

The magneto-optical pickup is adjusted such that a higher signal is detected for zero magnetization and a lower signal for maximum magnetization. Then, the low temperature area is masked and super-resolution detection is possible with low-to-high contrast. This detection scheme is also known as rear aperture detection (RAD).

The proposed adjustment is easily achieved by turning a half wave plate or a polarizing beam splitter, or by a adjusting a liquid-crystal based halve-wave plate.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:

Fig. 1    shows a known structure of a Super-RENS optical recording medium,

Fig. 2    depicts a structure of a Super-RENS optical recording medium according to the invention,

Fig. 3    shows a state of the art magneto-optical quadrilayer,

Fig. 4    illustrates typical properties of ferromagnetic materials based on rare earth-transition metal alloys,

Fig. 5    depicts the magnetization of the MO layers of Fig. 2 and the MOKE signal of the MO quadrilayer with increasing temperature,

Fig. 6    illustrates a magneto-optical pickup for reading from a super-RENS optical recording medium according to the invention,

Fig. 7    schematically depicts a high temperature area on a super-RENS optical recording medium resulting from illumination with a high-power light beam, and

Fig. 8    shows a diagram comparing the reflectivity increase of InSb at increasing read power with the magneto-optical signal increase of the invention.

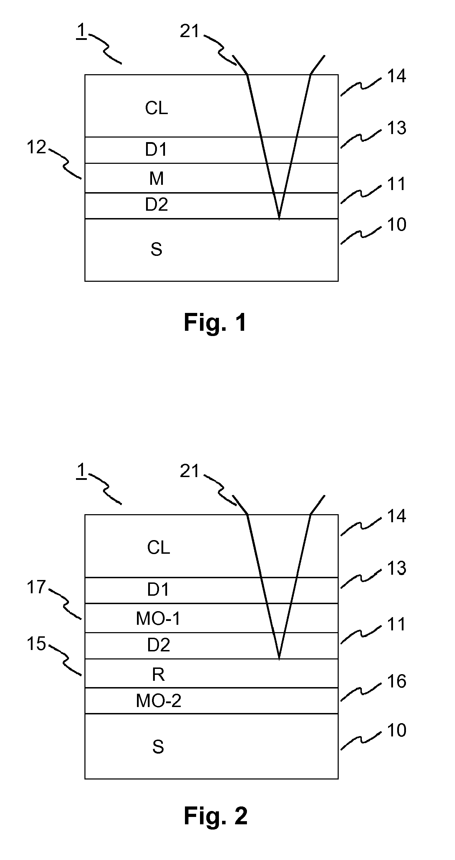

Fig. 1 shows a known structure of an optical recording medium 1 with a Super-RENS structure. Arranged above a substrate 10 (S) with a pit structure (not shown) is a second dielectric layer 11 (D2). A Super-RENS mask layer 12 (M) is sandwiched between this second dielectric layer 11 and a first dielectric layer 13 (D1). A cover layer 14 (CL) is arranged on top of the first dielectric layer 13 for protection against damages or environmental influences. Of course, this layer structure only constitutes one of a plurality of possible structures. For example, it has been proposed to place an additional reflective layer between the substrate 10 and the second dielectric layer 11.

A structure of an optical recording medium 1 according to the invention is depicted in Fig. 2. The substrate 10 with prerecorded pits is covered by a second magneto-optical layer 16 (MO-2) with magnetization M2, coercive field $H_c2$ and Curie temperature $T_c2$. A magneto-optical layer stack is deposited on this second magneto-optical layer 16, namely a MO-quadrilayer. The Mo-quadrilayer includes a reflective layer 15 (R), consisting for example on an Ag-alloy or an Al-alloy. Located above the reflective layer 15 is a second dielectric layer 11, e.g. a $ZnS-SiO_2$, layer, an $SiO_2$ layer, a SiN layer, etc. This second dielectric layer 11 is followed by a first magneto-optical layer 17 (MO-1) with magnetization M1, coercive field $H_c1$ and Curie temperature $T_c1$. A first dielectric layer 13 is arranged on top of the first magneto-optical layer 17, e.g. a $ZnS-SiO_2$, layer, an $SiO_2$ layer, a SiN layer, etc. Finally, a cover layer 14 is applied, which protects the layer stack.

The above sequence of layers is applicable to media formats which are read out through the thin cover layer 14. Alternatively, the layer stack is sputtered in reversed order onto the substrate 10 with prerecorded pits. In this case the optical recording medium is read out through the substrate 10.

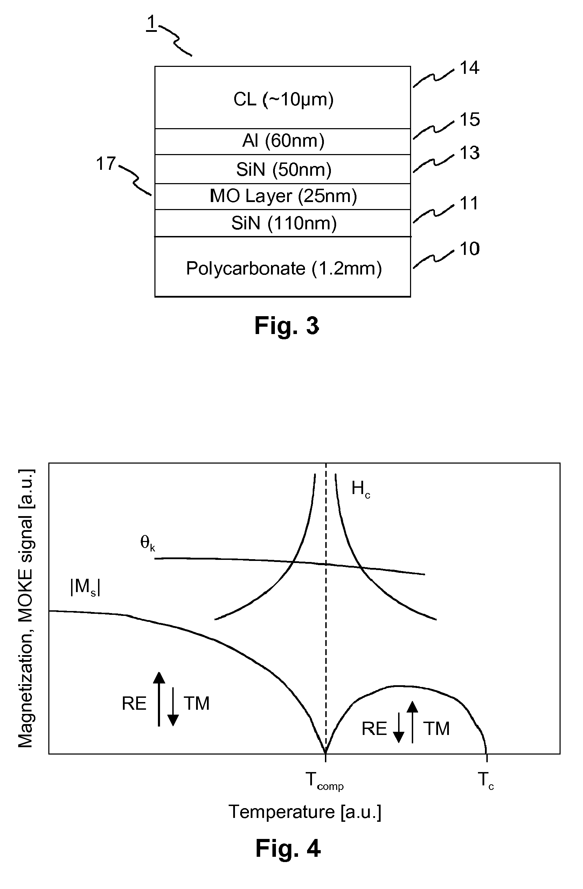

The described MO-quadrilayer allows to detect a magneto-optical signal with high contrast depending on the magnetization direction of the magneto-optical layer 17. An exemplary state of the art MO-quadrilayer is depicted in Fig. 3. By tuning the thickness of each layer the magneto-optical signal can be maximized. Read-out is made through the substrate.

Typical properties of ferromagnetic materials based on rare earth-transition metal alloys (RE-TM) are illustrated in Fig. 4. The diagram shows the magnetization $M_s$, the MO signal $\theta_k$ (Kerr-rotation) and the coercive field $H_c$ as a function of the temperature. Magneto-optical materials like TbFe show ferromagnetic properties with two competing magnetization directions of the two components (RE and TM). At a certain compensation temperature $T_{comp}$ the sub-lattice magnetizations cancel out and the net magnetic moment is zero. At this temperature the coercive field $H_c$ shows a strong maximum. Therefore, around $T_{comp}$ such materials are very stable against external magnetic fields. The composition is usually such that $T_{comp}$ is close to room temperature.

For the current invention the Curie temperature $T_c1$ of the first magneto-optical layer 17 should be lower than the Curie temperature $T_c2$ of the second magneto-optical layer 16, i.e. $T_c1 < T_c2$.

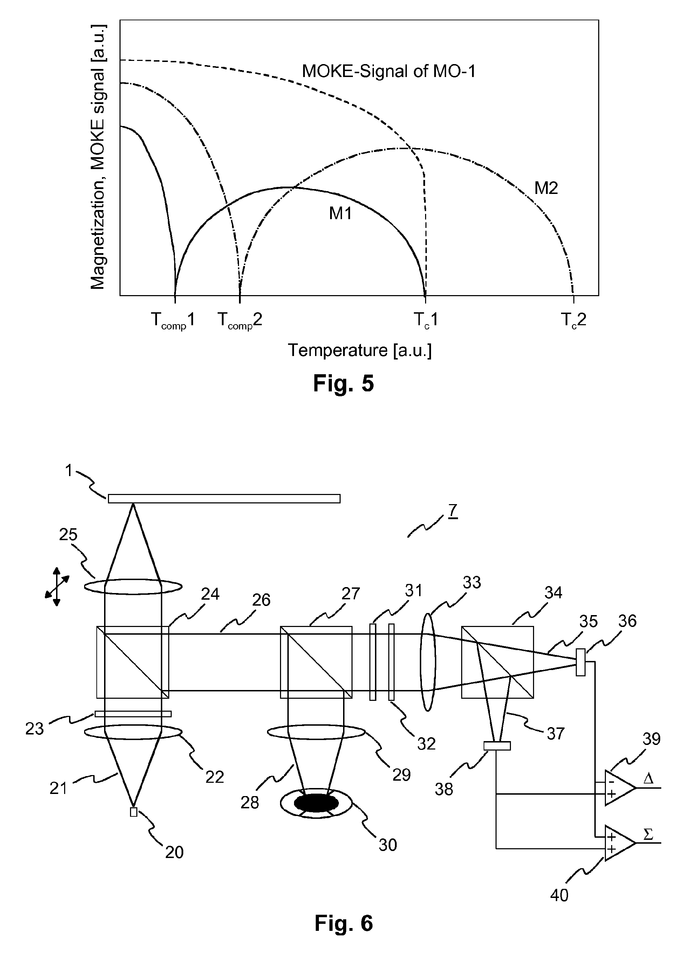

Furthermore, between room temperature and $T_c1$ the coercive field $H_c1$ of the first magneto-optical layer 17 should be lower than the magnetic stray field induced by the magnetization of the second magneto-optical layer 16. Both compensation temperatures should be close to room temperature. These conditions are illustrated in Fig. 5, which shows the magnetization of the first magneto-optical layer 17 (MO-1) and the second magneto-optical layer 16 (MO-2) with increasing temperature as well as the MOKE signal (magneto-optical Kerr effect signal) of the quadrilayer which includes the first magneto-optical layer 17.

Appropriate magneto-optical materials are amorphous TbFe with a Curie temperature between 100°C and 150°C, amorphous TbFeCo with a Curie temperature between 180°C and 250°C, and amorphous GdFeCo with a Curie temperature between 230°C and 400°C. The exact temperatures depend on the material composition and also on the manufacturing process and conditions, e.g. sputtering, molecular beam epitaxy, etc. For example, a TbFe or TbFeCo layer can be used for the first magneto-optical layer 17, whereas for the second magneto-optical layer 16 TbFeCo or GdFeCo can be used.

Fig. 6 illustrates a magneto-optical pickup 7 for reading from a super-RENS optical recording medium 1 according to the invention. A light source 20 generates a reading light beam 21, which is collimated by a collimating lens 22. The collimated light beam 21 passes through a beam circularizer 23 and a partial polarizing beam splitter 24 and is then focused by an objective lens 25 into the super-RENS optical recording medium 1. The light beam 26 reflected by the super-RENS optical recording medium 1 is collimated by the objective lens 25 and directed by the partial polarizing beam splitter 24 towards a detection branch. A beam splitter 27 directs a fraction 28 of the reflected light beam 26 via an astigmatic lens 29 towards a quadrant detector 30 for servo control, i.e. for tracking and focusing. The remaining fraction of the reflected light beam 26 passes through a quarter wave plate 31 and a half wave plate 32 and is the focused by a further objective lens 33. A polarizing beam splitter 34 splits the focused light beam 26 into a first part 35, which is detected by a first detector 36, and a second part 37, which is detected by a second detector 38. The relative intensity of the two parts 35, 37 depends on the polarization of the reflected light beam 26. A differential amplifier 39 and a summing amplifier 40 generate a difference signal $\Delta$ and a sum signal $\Sigma$, respectively, from the output signals of the two detectors 36, 38.

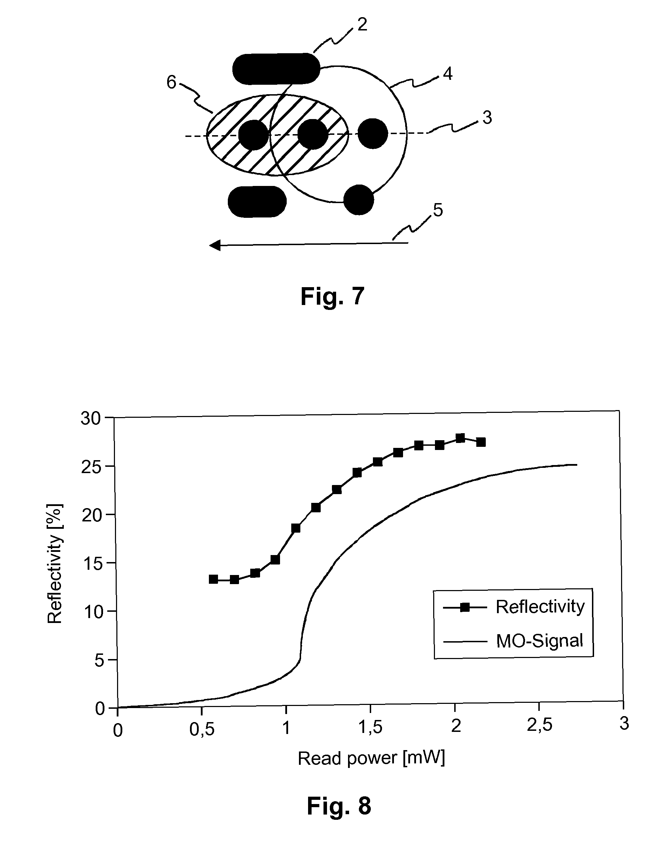

Fig. 7 schematically depicts the data area of the super-RENS optical recording medium 1. A plurality of pits 2 are arranged along tracks 3. The medium 1 moves below a focal spot 4 of the high-power light beam 21 in a movement direction 5. The illumination with the high-power light beam 21 results in a high temperature area 6. For reading the power is adjusted such that in the high temperature area 6 of the focused beam 21 the temperature in the layer stack is between $T_c1$ and $T_c2$. More specifically, the temperature in the first magneto-optical layer 17 is above $T_c1$ and the temperature in the second magneto-optical layer 16 is below $T_c2$. In this case, the magnetization and the MOKE signal (respectively $\theta_k$) of the first magneto-optical layer 17 are zero in the high temperature area 6.

The magneto-optical pickup 7 is adjusted such that a higher signal is detected for zero magnetization and a lower signal for maximum magnetization. Then, as shown in Fig. 7, the low temperature area is masked and super-resolution detection is possible with low-to-high contrast, which is also called rear aperture detection, RAD.

Assuming that an intensity $I_0$ reaches the polarizing beam splitter 34 and the layer stack generates a Kerr-rotation $\theta_k$, the maximum magneto-optical differential signal is approximately calculated to:

$$S_{MO} = I_0 / 2 \times ( (1 + \theta_k) - (1 - \theta_k)) = I_0 \times \theta_k$$

The intensity $I_0$ is modulated in accordance with the prerecorded pits 2, which allows to detect the data signal. In addition, the signal depends on the Kerr-rotation inside the laser spot. It has been shown that for typical materials and a wavelength of 405nm the maximum Kerr-rotation $\theta_k$ is in the range of 0.5° to 0.6°. These numbers are already sufficient to detect magneto-optical data from conventional magneto-optical recording media. For such systems the signal $S_{MO}$ can be positive or negative, depending on the magnetization direction of the magneto-optical layer, which provides a symmetric HF signal. In contrast, with the proposed system the difference between maximum magnetization (or magneto-optical signal) at room temperature and zero magnetization (or magneto-optical signal) above the Curie temperature is used to separate the light coming from the slightly shifted center of the spot, i.e. from the super-RENS aperture, and the light from the surrounding area. The signal modulation is generated by the scattering of the light from the center of the spot by the pits 2 of the super-RENS optical recording medium 1. As the scattering is based on interference, which requires identical polarization to be effective, the light from the surrounding area does not contribute significantly to the signal modulation. This corresponds to a spot diameter reduction, which is the basis of the proposed super-resolution detection. Further, by slightly turning the polarizing beam splitter 34 or the half wave plate 32 an offset is introduced in the differential signal. Therefore, the magneto-optical pickup 7 can be adjusted such that $S_{MO}$ is zero for maximum magnetization and has maximum amplitude for zero magnetization. This can be achieved by aligning the magnetization direction of the first magneto-optical layer 17 such that a conventional magneto-optical pickup without offset would detect a negative signal $S_{MO}$. This alignment may be achieved automatically by replacing the half wave plate 32 in Fig. 6 with a liquid-crystal based halve wave plate. At low read-out power this liquid-crystal based halve wave plate is adjusted in such a way that the signal amplitude $S_{MO}$ is close to zero. This may also be used to compensate variations of the Kerr rotation angle by various manufacturers of super-RENS optical recording media and temperature changes.

Compared to state of the art super-resolution approaches, e.g. based on the semiconductor material InSb, the current invention has the advantage that the magneto-optical signal is close to zero at low laser power. Therefore, the reflected signal from the front part of the laser spot 4 in Fig. 7 is negligible, whereas the reflected signal from the high temperature part of the laser beam 21 reaches a maximum. This enables a very efficient super-resolution.

Looking back at the formula $S_{MO} = I_0 \times \theta_k$ it is apparent that the first factor $I_0$ is responsible for the pit detection and that the second factor $\theta_k$ enables the super-RENS effect. Therefore, the contrast mechanisms of both effects can be optimized independently.

The second magneto-optical layer 16 is located below the reflective layer 15 and does not affect the optical read-out. The second magneto-optical layer 16 has a high magnetization and creates a magnetic stray field, which keeps the magnetization of the first magneto-optical layer 17 in the heated area in the preferred direction after the read-out process, i.e. during cooling down. To achieve this it is advantageous if the second magneto-optical layer 16 has a high magnetization around $T_c1$, as shown in Fig. 5. To this end the compensation temperature of the second magneto-optical layer 16 should be much lower than $T_c1$, in particular close to room temperature. This further guarantees that the magnetization of the second magneto-optical layer 16 cannot be changed by moderate external magnetic fields because of the high coercive field around the compensation temperature. Preferably also the compensation temperature of the first magneto-optical layer 17 is close to room temperature to avoid demagnetization or inversion of the magnetization. Nevertheless, if the magnetization of one of the layers 16, 17 has been inversed or if one layer 16, 17 has been demagnetized, the super-RENS optical recording medium 1 can be activated again by initialization with an applied magnetic field, similar to conventional MO recording media.

The diagram in Fig. 8 compares the reflectivity increase of a super-RENS optical recording medium using an InSb mask layer 12 with increasing read power with the magneto-optical signal increase of a super-RENS optical recording medium 1 according to the present invention. Though the absolute values of the reflectivity of the InSb medium cannot be compared directly to the MO-signal of the medium 1 according to the invention, the most important difference between both is that the magneto-optical signal is close to zero at low read power.

**Claims**

1. Super-RENS optical recording medium (1) with a mask layer (12), **characterized in that** the mask layer (12) is a first magneto-optical layer (17), and **in that** the Super-RENS optical recording medium (1) further has a second magneto-optical layer (16) located below the first magneto-optical layer (17) in a reading direction.

2. Super-RENS optical recording medium (1) according to claim 1, **wherein** the first magneto-optical layer (17) is part of a magneto-optical quadrilayer including a reflective layer (15), a second dielectric layer (11), the first magneto-optical layer (17), and a first dielectric layer (13).

3. Super-RENS optical recording medium (1) according to claim 1 or 2, **wherein** a Curie temperature ($T_c1$) of the first magneto-optical layer (17) is lower than a Curie temperature ($T_c2$) of the second magneto-optical layer (16).

4. Super-RENS optical recording medium (1) according to claim 3, **wherein** a compensation temperature ($T_{comp}2$) of the second magneto-optical layer (16) is lower than the Curie temperature ($T_c1$) of the first magneto-optical layer (17).

5. Super-RENS optical recording medium (1) according to claim 4, **wherein** the compensation temperature ($T_{comp}2$) of the second magneto-optical layer (16) and/or a compensation temperature ($T_{comp}1$) of the first magneto-optical layer (17) is/are close to room temperature.

6. Super-RENS optical recording medium (1) according to one of claims 1 to 5, **wherein** the first magneto-optical layer (17) is a TbFe layer or a TbFeCo layer.

7. Super-RENS optical recording medium (1) according to one of claims 1 to 6, **wherein** the second magneto-optical layer (16) is a TbFeCo layer or a GdFeCo layer.

8. Method for reading from a super-RENS optical recording medium (1) according to one of claims 1 to 7, **having** the step of adjusting an optical component (32, 34) such that a higher signal is detected for zero magnetization and a lower signal is detected for maximum magnetization.

9. Method according to claim 8, **wherein** the step of adjusting an optical component (32, 34) includes turning a polarizing beam splitter (34) or a half wave plate (32), or adjusting a liquid-crystal based halve wave plate.

10. Apparatus for reading from a Super-RENS optical recording medium (1) according to one of claims 1 to 7, **having** an optical component (32, 34) that is adjustable such that a higher signal is detected for zero magnetization and a lower signal is detected for maximum magnetization.

11. Apparatus according to claim 10, **wherein** the optical component is a polarizing beam splitter (34), a half wave plate (32) or a liquid-crystal based halve wave plate.

1

21

14

CL

12

D1

13

M

D2

11

10

S

**Fig. 1**

1

21

14

CL

13

17

D1

MO-1

15

D2

11

R

16

MO-2

10

S

**Fig. 2**

**Fig. 3**

**Fig. 4**

**Fig. 5**

**Fig. 6**

**Fig. 7**

**Fig. 8**

Europäisches
Patentamt
European
Patent Office
Office européen
des brevets

**EUROPEAN SEARCH REPORT**

Application Number

EP 10 30 5782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 759 657 A (ONAGI NOBUAKI [JP] ET AL) 2 June 1998 (1998-06-02) * the whole document * ----- | 1-11 | INV. G11B7/24 |
| A | EP 0 343 727 A1 (PHILIPS NV [NL] PHILIPS ELECTRONICS NV [NL]) 29 November 1989 (1989-11-29) * the whole document * ----- | 1-11 | |
| A | KIM JOOHO ET AL: "Reactive recording with rare-earth transition metal" APPLIED PHYSICS LETTERS, AIP, AMERICAN INSTITUTE OF PHYSICS, MELVILLE, NY, US LNKD- DOI:10.1063/1.1409951, vol. 79, no. 16, 15 October 2001 (2001-10-15), pages 2600-2602, XP012029161 ISSN: 0003-6951 * the whole document * ----- | 1-11 | |
| A | EP 0 848 381 A2 (CANON KK [JP]) 17 June 1998 (1998-06-17) * the whole document * ----- | 1-11 | TECHNICAL FIELDS SEARCHED (IPC) G11B |

The present search report has been drawn up for all claims

| Place of search | Date of completion of the search | Examiner |
|---|---|---|
| The Hague | 21 September 2010 | Skaropoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 5782

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2010

| Patent document cited in search report | | | Publication date | Patent family member(s) | | Publication date |
|---|---|---|---|---|---|---|
| US 5759657 | A | | 02-06-1998 | NONE | | |
| EP 0343727 | A1 | | 29-11-1989 | AT | 118918 T | 15-03-1995 |
| | | | | AU | 622449 B2 | 09-04-1992 |
| | | | | BR | 8902391 A | 16-01-1990 |
| | | | | CA | 1322791 C | 05-10-1993 |
| | | | | CN | 1039319 A | 31-01-1990 |
| | | | | DE | 68921244 D1 | 30-03-1995 |
| | | | | DE | 68921244 T2 | 07-09-1995 |
| | | | | ES | 2069573 T3 | 16-05-1995 |
| | | | | HK | 62396 A | 19-04-1996 |
| | | | | JP | 2096926 A | 09-04-1990 |
| | | | | JP | 2732297 B2 | 25-03-1998 |
| | | | | NL | 8801327 A | 18-12-1989 |
| | | | | US | 5153873 A | 06-10-1992 |
| EP 0848381 | A2 | | 17-06-1998 | DE | 69719929 D1 | 24-04-2003 |
| | | | | DE | 69719929 T2 | 13-11-2003 |
| | | | | JP | 10228684 A | 25-08-1998 |
| | | | | US | 5962154 A | 05-10-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005081242 A
- US 20040257968 A
- WO 2004032123 A